# FASCICULE DE BREVET EUROPEEN

(11) **EP 4 355 181 B1**
(45) Date de publication et mention de la délivrance du brevet: **29.04.2026**
(21) Numéro de dépôt: 22733465.3
(22) Date de dépôt: 17.06.2022
(51) Int. Cl.: A47J 43/044

(54) **APPAREIL ÉLECTROMÉNAGER DE PRÉPARATION CULINAIRE AVEC CHÂSSIS STRUCTUREL INTERNE ET CAPOTAGE**
HAUSHALTSVORRICHTUNG ZUR LEBENSMITTELZUBEREITUNG MIT INNEREM STRUKTURRAHMEN UND ABDECKUNG
HOUSEHOLD FOOD PREPARATION APPLIANCE WITH INTERNAL STRUCTURAL FRAME AND COVER

(30) Priorité: 18.06.2021 FR 2106528
(43) Date de publication de la demande: 24.04.2024
(73) Titulaire: SEB S.A., 69130 Ecully (FR)
(72) Inventeur: MORIN, Yoann, 69134 Ecully Cedex (FR); LEMERCIER, Michel, 69134 Ecully Cedex (FR)
(74) Mandataire: SEB Développement
(86) Numéro de dépôt international: PCT/EP2022/066623
(87) Numéro de publication internationale: WO 2022/263666

(56) Documents cités:
- EP-A1- 3 673 777
- CN-A- 106 618 268
- CN-U- 207 084 721
- US-A- 4 176 971
- US-A- 4 277 181

## Description

### Domaine technique

L'invention concerne le domaine technique général des appareils électroménagers de préparation culinaire comportant un socle destiné à recevoir un bol de travail principal, ou récipient de travail, et comportant une tête liée au socle. La tête comporte un entraîneur principal qui est agencé sous la tête en regard de l'embase, et qui est configuré pour entraîner, sous l'action d'un moteur principal, un outil de travail principal selon un mouvement de travail principal. Lors du fonctionnement de l'appareil, l'outil de travail principal effectue son mouvement de travail à l'intérieur du bol de travail, de manière à agir sur les aliments qui ont été versés dans le bol de travail.

De manière générale le socle présente une embase ayant une face inférieure par laquelle le socle est destiné à reposer sur une surface d'accueil et une face supérieure sur laquelle est aménagée une zone de réception de bol configurée pour recevoir un bol de travail principal.

La tête est montée sur le socle par une liaison de dégagement ayant au moins un degré de liberté de mouvement de telle sorte que la tête est mobile par rapport au socle entre une position de travail et une position dégagée dans laquelle l'entraîneur principal est plus éloigné de l'embase que dans la position de travail.

Par ailleurs, l'appareil comporte une transmission mécanique de tête qui est agencée dans la tête, qui est entraînée par l'arbre moteur du moteur principal et qui entraîne l'entraîneur principal selon son mouvement de travail principal.

Ce type d'appareil présente l'avantage de permettre le malaxage de pâtes ou le mixage d'ingrédients dans le bol de travail principal. Pour cette raison, ces appareils sont souvent désignés par l'appellation de « robot pâtissier », même s'ils peuvent souvent être utilisés pour des préparations autres que la pâtisserie. Ce type d'appareil présente la particularité que les efforts induits par l'interaction entre l'outil de travail principal et les aliments contenus dans le bol de travail principal peuvent être importants. Or, ces efforts importants se répercutent d'un côté sur la tête, par l'intermédiaire de l'outil de travail principal, et d'un autre côté sur le socle, par l'intermédiaire du bol de travail principal. Ces efforts importants nécessitent donc de concevoir notamment la tête de telle sorte qu'elle puisse encaisser ces efforts relativement importants.

### Technique antérieure

Dans les appareils électroménagers de préparation culinaire conventionnels du type précité, les efforts importants engendrés lors du travail nécessitent de concevoir notamment la tête de manière à pouvoir encaisser ces efforts sans déformation notable. Pour cela, dans certaines machines, le socle et la tête sont réalisés en matériaux métalliques. Dans d'autres machines, le socle et/ou la tête sont réalisés en matériau plastique. Toutefois, dans ce cas, les contraintes de résistance mécanique imposent d'utiliser des matériaux plastiques sélectionnés pour leur résistance mécanique, et peuvent nécessiter qu'ils incorporent des renforts de type de fibres ou billes de verre, Bien entendu, la mise en œuvre de tels matériaux métalliques ou de tels matériaux plastiques peut se révéler relativement onéreuse s'il s'agit par ailleurs de concevoir le socle et/ou la tête avec des formes complexes qui peuvent être rendues nécessaires ou tout du moins désirables soit pour des motivations fonctionnelles, soit pour des motivations esthétiques. Notamment, pour des pièces réalisées en matériau plastique, le fait de vouloir avoir à la fois une importante résistance mécanique et un aspect de surface esthétique peut nécessiter la mise en œuvre de processus de fabrication plus coûteux, et/ou de sélectionner des matières plus coûteuses.

Un appareil électroménager de préparation culinaire du type précité est connu du document US 4 277 181 A.

L'invention a donc pour but de permettre la conception d'un appareil électroménager de préparation culinaire du type précité qui puisse, avec des coûts de production réduits, répondre d'une part à la nécessité d'une résistance mécanique élevée et d'autre part répondre à des contraintes fonctionnelles ou esthétiques concernant les surfaces apparentes de la tête, et éventuellement aussi du socle.

### Exposé de l'invention

L'invention concerne un appareil électroménager de préparation culinaire, du type comprenant :
- un socle présentant une embase ayant une face inférieure par laquelle le socle est destiné à reposer sur une surface d'accueil et une face supérieure sur laquelle est aménagée une zone de réception de bol configurée pour recevoir un bol de travail principal,
- un moteur principal ayant un arbre moteur orienté selon un axe moteur,
- une tête, liée au socle, la tête ayant un entraîneur principal qui est agencé sous la tête en regard de la zone de réception de bol de l'embase, qui est entraîné en rotation par le moteur principal, et qui est configuré pour entraîner un outil de travail principal selon un mouvement de travail principal.

L'appareil est du type dans lequel la tête est montée sur le socle par une liaison de dégagement ayant au moins un degré de liberté de mouvement de telle sorte que la tête est mobile par rapport au socle entre une position de travail et une position dégagée dans laquelle l'entraîneur principal est plus éloigné de l'embase que dans la position de travail.

L'appareil est du type dans lequel l'appareil comporte une transmission mécanique de tête qui est agencée dans la tête, qui est entraînée par l'arbre moteur du moteur principal et qui entraîne l'entraîneur principal selon le mouvement de travail principal.

L'appareil est caractérisé en ce que la tête comprend un châssis structurel interne qui est monté sur le socle par la liaison de dégagement, qui porte la transmission mécanique de tête et qui porte l'entraîneur principal,
et en ce que la tête comporte un capotage de tête qui est distinct du châssis structurel interne de la tête et qui entoure le châssis structurel interne de la tête et la transmission mécanique de tête.

Ces dispositions permettent d'obtenir un appareil électroménager de préparation culinaire du type précité dont les surfaces apparentes de la tête présentent un aspect satisfaisant, qui présente des coûts de production réduits tout en ayant une construction robuste.

Ces dispositions permettent également de pouvoir faire plus aisément de la différentiation sur l'habillage de l'appareil électroménager de préparation culinaire.

Selon d'autres caractéristiques optionnelles d'un tel appareil, prises seules ou en combinaison :
- le capotage de tête délimite un volume interne à l'intérieur duquel sont reçus le châssis structurel interne de la tête et la transmission mécanique de tête ;
- le capotage de tête comporte une ou plusieurs parois délimitant le volume interne à l'intérieur duquel sont reçus le châssis structurel interne de la tête et la transmission mécanique de tête ;
- le capotage de tête comporte une paroi supérieure, une paroi inférieure et deux parois latérales reliant la paroi supérieure à la paroi inférieure, le châssis structurel interne de la tête et la transmission mécanique de tête étant reçus entre la paroi supérieure et la paroi inférieure du capotage de tête et entre les deux parois latérales du capotage de tête ;
- le capotage de tête comporte une paroi périphérique qui entoure le châssis structurel interne de la tête et la transmission mécanique de tête ;
- le capotage de tête comporte une ouverture pour l'entraîneur principal ;
- l'appareil comporte un mécanisme de verrouillage de la tête en position de travail et/ou en position dégagée, le mécanisme de verrouillage est porté par le châssis structurel interne de la tête, et le capotage de tête comporte une ouverture pour le passage d'un organe de manœuvre du mécanisme de verrouillage qui est destiné à être manipulé par un utilisateur.
- le capotage de tête est fixé au moins en partie sur le châssis structurel interne de la tête ;
- le capotage de tête est réalisé en plusieurs parties ;
- la transmission mécanique de tête comporte un châssis intermédiaire par l'intermédiaire duquel elle est portée par le châssis structurel interne de la tête ;
- l'entraîneur principal est porté par le châssis intermédiaire de la transmission mécanique de tête ;
- le moteur principal est porté par le châssis structurel interne de la tête ;
- le socle comporte une portion de liaison qui est décalée de la zone de réception de bol, vers l'arrière selon une direction longitudinale de l'appareil, et le châssis structurel interne de la tête est monté sur la portion de liaison du socle par la liaison de dégagement ;
- le châssis structurel interne de la tête comporte une portion arrière qui est liée à la liaison de dégagement, et une portion avant qui s'étend longitudinalement vers l'avant depuis la portion arrière du châssis structurel interne de la tête, en porte-à-faux au-dessus de l'embase lorsque la tête est en position de travail ;
- la portion arrière du châssis structurel interne de la tête délimite un logement qui s'étend verticalement et qui reçoit le moteur principal ;
- la portion arrière du châssis structurel interne de la tête présente une extrémité inférieure par laquelle le châssis structurel interne de la tête est monté sur le socle par la liaison de dégagement ;
- la liaison de dégagement comprend au moins une articulation autour d'un axe horizontal ;
- la liaison de dégagement comprend un montage en chape de l'extrémité inférieure de la portion arrière du châssis structurel interne de la tête avec la portion de liaison du socle ;
- la liaison de dégagement comprend au moins une glissière ;
- le châssis structurel interne de la tête comporte des éléments de forme qui, dans la position de travail, coopèrent avec des éléments de forme complémentaires du socle pour limiter des débattements de la tête selon au moins une direction perpendiculaire à une trajectoire de dégagement de la tête entre sa position de travail et sa position dégagée, la trajectoire de dégagement étant définie par la liaison de dégagement ;

l'arbre moteur porte un premier entraîneur supérieur ;
la transmission mécanique de tête comporte une roue dentée d'entrée montée sur l'arbre moteur et la roue dentée d'entrée entraîne une roue dentée secondaire ;
la roue dentée secondaire entraîne en rotation l'entraîneur principal par l'intermédiaire d'une cascade de pignons ;
la roue dentée d'entrée entraîne la roue dentée secondaire par l'intermédiaire d'une courroie crantée ;
la courroie crantée est mise en tension par un galet tendeur soumis à l'action d'un ressort ;
la transmission mécanique de tête comporte différents composants mobiles en même temps que le moteur principal et que l'entraîneur principal, qui sont portés par le châssis intermédiaire.

Dans certains modes de réalisation, le socle comporte un châssis structurel inférieur ayant une griffe de fixation du bol de travail principal, le châssis structurel inférieur du socle comporte une portion de liaison qui porte la liaison de dégagement, et le socle comporte un capotage de socle qui est distinct du châssis structurel inférieur et qui recouvre par au-dessus le châssis structurel inférieur.

Selon d'autres caractéristiques optionnelles de modes de réalisation, prises seules ou en combinaison :
- le capotage de socle comporte une ouverture pour la griffe de fixation du bol de travail principal ;
- le capotage de tête et le capotage de socle se raccordent avec affleurement au niveau de la liaison de dégagement ;
- l'appareil comporte un mécanisme de verrouillage de la tête en position de travail et/ou en position dégagée, le mécanisme de verrouillage est porté par le châssis structurel inférieur du socle, et le capotage de socle comporte une ouverture pour le passage d'un organe de manœuvre du mécanisme de verrouillage qui est destiné à être manipulé par un utilisateur ;
- le moteur principal est porté par le châssis structurel inférieur du socle.

### Brève description des dessins

[Fig.1] La [Fig.1] est une vue en perspective d'un appareil électroménager de préparation culinaire comprenant un socle et une tête, certaines parties étant illustrées en transparence, et la tête étant illustrée en position de travail par rapport au socle.
[Fig.2] La [Fig.2] est une vue en perspective de l'appareil de la [Fig.1], sans les éléments de capotage de tête et de capotage de socle, et la tête étant illustrée en position de travail par rapport au socle.
[Fig.3] La [Fig.3] est une vue en perspective éclatée de la tête de l'appareil des figures 1 et 2, illustrant le capotage de tête qui est distinct d'un châssis structurel interne de la tête.
[Fig.4] La [Fig.4] est une vue en perspective éclatée du socle de l'appareil des figures 1 et 2, illustrant le capotage de socle qui est distinct d'un châssis structurel inférieur du socle.
[Fig.5] La [Fig.5] est une vue en perspective de l'appareil des figures 1 et 2, sans les éléments de capotage de tête et de capotage de socle, illustrant la tête en position dégagée par rapport au socle.
[Fig.6] La [Fig.6] est une vue de côté de l'appareil des figures 1 et 2, sans les éléments de capotage de tête et de capotage de socle, illustrant la tête en position dégagée par rapport au socle et illustrant un mécanisme de verrouillage de la tête en position dégagée.
[Fig.7] La [Fig.7] est une vue de la tête de l'appareil des figures 1 et 2, en section transversale par le plan VII-VII de la [Fig.1].
[Fig.8] La [Fig.8] est une vue de la tête de l'appareil des figures 1 et 2, en section transversale par le plan VIII-VIII de la [Fig.1].
[Fig.9] La [Fig.9] est une vue en perspective éclatée illustrant une transmission mécanique de tête comportant un châssis intermédiaire destiné à être fixé sur le châssis structurel interne de la tête.
[Fig.10] La [Fig.10] est une vue en perspective de l'agencement de la transmission mécanique de tête dans la tête de l'appareil, avec une vue de détail illustrant plus particulièrement un mécanisme de tension d'une courroie de transmission de la transmission mécanique de tête.
[Fig.11] La [Fig.11] est une vue en perspective de l'appareil, sans les éléments de capotage de tête et de capotage de socle, avec une vue de détail illustrant plus particulièrement des éléments de forme du châssis structurel interne qui, dans la position de travail de la tête, coopèrent avec des éléments de forme complémentaires du socle pour limiter les débattements de la tête selon au moins une direction perpendiculaire à une trajectoire de dégagement de la tête.
[Fig.12] La [Fig.12] est une vue de détail illustrant une variante de réalisation des éléments de forme du châssis structurel interne qui, dans la position de travail de la tête, coopèrent avec des éléments de forme complémentaires du socle pour limiter les débattements de la tête selon au moins une direction perpendiculaire à une trajectoire de dégagement de la tête.

### Description des modes de réalisation

On a représenté sur les figures un mode de réalisation d'un appareil 10 qui est un appareil électroménager de préparation culinaire, plus particulièrement ici un appareil de type robot pâtissier.

L'appareil 10 comprend un socle 12. Le socle 12 est destiné à reposer sur une surface d'accueil, qui, dans le cadre de cette description, sera considérée comme étant horizontale. Les notions de « horizontal », « vertical », « haut » et « bas », et les notions d'orientations qui en découlent, se réfèrent à des orientations normales de l'appareil en situation de fonctionnement lorsque son socle est posé sur une telle surface d'accueil horizontale.

Dans l'exemple illustré, le socle 12 comporte une embase 14 sensiblement horizontale et une portion de liaison 12a qui s'étend verticalement vers le haut depuis l'embase 14. L'embase 14 s'étend depuis l'extrémité inférieure de la portion de liaison 12a selon une direction longitudinale horizontale, vers l'avant par rapport à la portion de liaison 12a, l'avant et l'arrière selon la direction longitudinale étant ainsi définis de manière arbitraire.

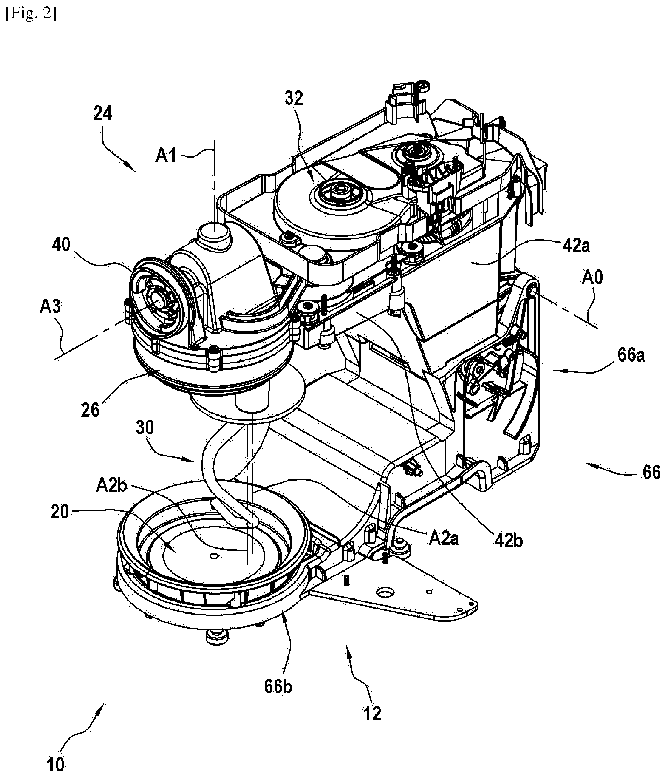

L'embase 14 comprend donc une face inférieure 18 par laquelle le socle 12 est destiné à reposer sur la surface d'accueil. L'embase 14 du socle 12 comporte par ailleurs, sur une face supérieure, une zone de réception de bol 20, visible sur la [Fig.2], qui est configurée pour recevoir un bol de travail principal 22 destiné à recevoir des aliments pour une préparation culinaire. Dans l'exemple illustré, la zone de réception de bol 20 est agencée à l'extrémité longitudinale avant de l'embase 14. De préférence, la zone de réception de bol 20 est configurée sous la forme d'une griffe de fixation, par exemple de type griffe de fixation à baïonnette, et le bol de travail principal 22 est configuré pour présenter une fixation complémentaire afin d'assurer une fixation mécanique amovible du bol de travail principal 22 sur le socle 12.

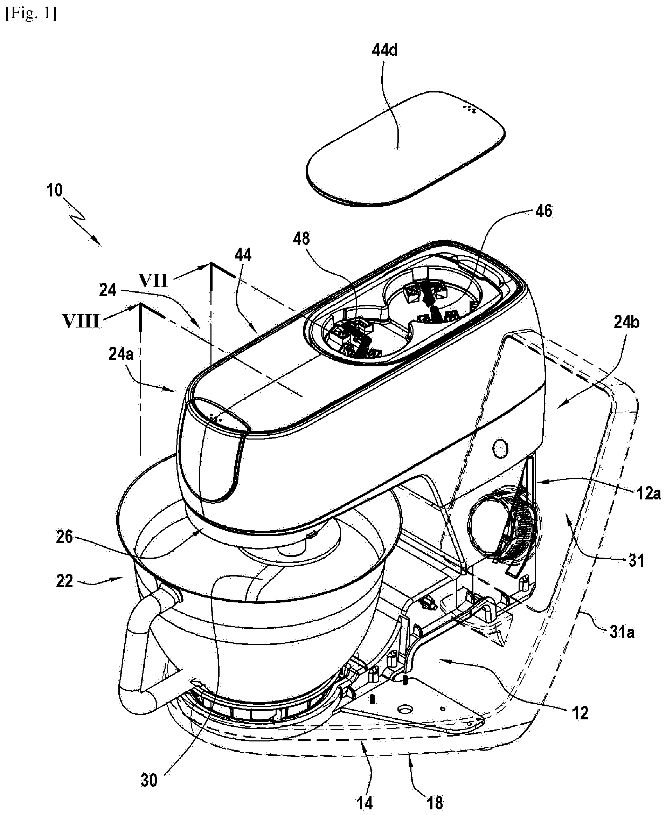

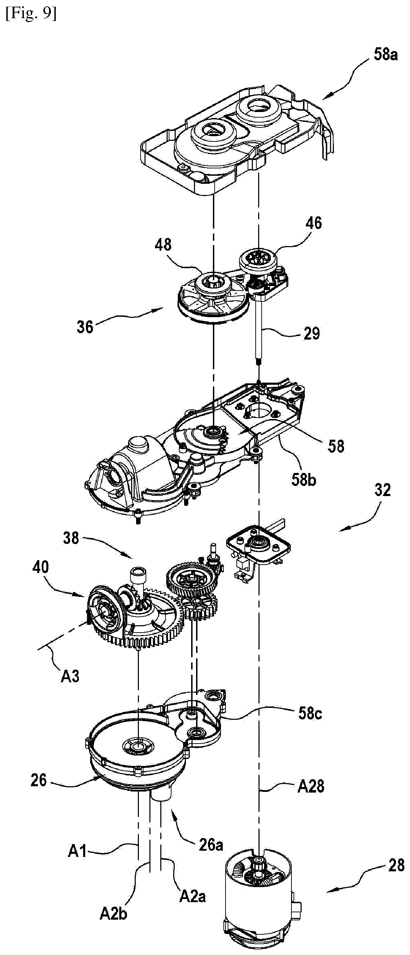

L'appareil 10 comporte par ailleurs une tête 24, liée au socle 12, la tête 24 ayant un entraîneur principal 26 qui est agencé sous la tête 24, en regard de la zone de réception de bol 20 de l'embase 14, et qui est configuré pour entraîner un outil de travail principal 30 selon un mouvement de travail principal. Dans l'exemple, l'entraîneur principal 26 comporte deux coupleurs de sortie 26a, 26b, dont chacun peut recevoir un outil de travail différent en fonction du travail à accomplir sur les aliments. En principe, un seul outil de travail principal 30 est monté à la fois sur l'entraîneur principal 26, sur celui des deux coupleurs de sortie 26a, 26b qui correspond à cet outil de travail principal 30. Dans l'exemple de réalisation illustré sur les figures 1 et 2, l'appareil 10 comporte un outil de travail principal 30 de type crochet. Dans son mouvement de travail, l'outil de travail principal 30 se déplace à l'intérieur du bol de travail principal 22 lorsque celui-ci est reçu sur le socle 12. Dans l'exemple illustré, le mouvement de travail principal de l'outil de travail principal 30 est un mouvement orbital composé d'un premier mouvement de rotation de l'entraîneur principal 26 autour d'un premier axe vertical fixe A1, indiqué sur les figures 2 et 9, et d'un second mouvement de rotation autour d'un second axe vertical mobile qui est parallèle au premier axe vertical fixe A1 et qui est mobile en rotation autour de ce premier axe vertical fixe A1. Dans le cas illustré d'un entraîneur principal avec deux coupleurs de sortie 26a, 26b, chaque coupleur est décalé radialement par rapport au premier axe vertical fixe A1 de rotation de l'entraîneur principal 26, de sorte que les coupleurs de sortie 26a, 26b sont agencés respectivement selon leur propre second axe vertical mobile A2a, A2b, qui sont parallèles et décalés radialement par rapport au premier axe vertical fixe A1, et qui sont décalés angulairement autour du premier axe vertical fixe A1.

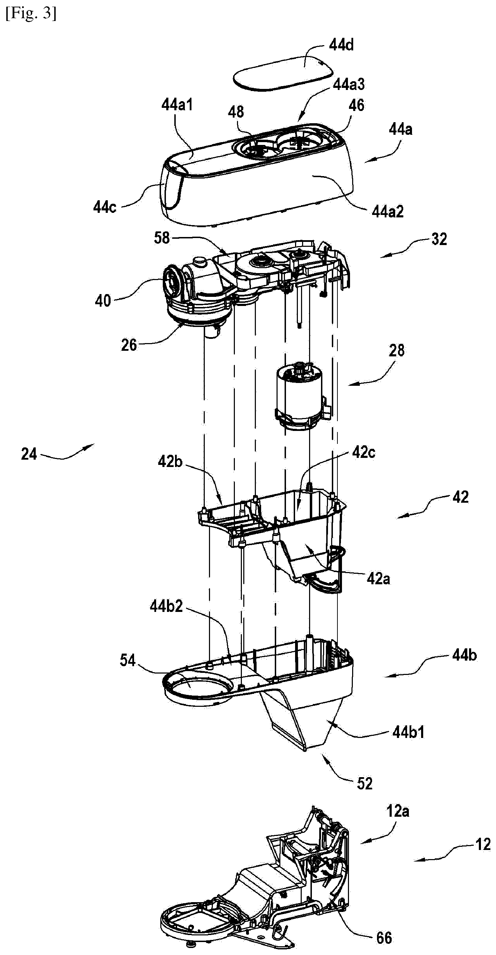

L'appareil 10 comporte en effet un moteur principal 28, ici un moteur électrique, visible sur les figures 3 et 9 notamment, le moteur principal 28 ayant un arbre moteur 29 orienté selon un axe moteur A28. Dans l'exemple illustré, il sera vu que le moteur principal 28 est porté par la tête 24, en étant agencé dans une portion longitudinale arrière de la tête 24. Dans l'exemple illustré, l'axe moteur A28 s'étend selon une direction verticale dans la tête 24. Cependant, dans certains modes de réalisation, on pourrait prévoir que l'axe moteur du moteur principal 28 soit orienté selon une direction horizontale, ou inclinée. De même, plutôt que d'être porté par la tête 24, le moteur principal 28 pourrait être porté par le socle 12, par exemple en étant agencé dans la portion de liaison 12a du socle 12.

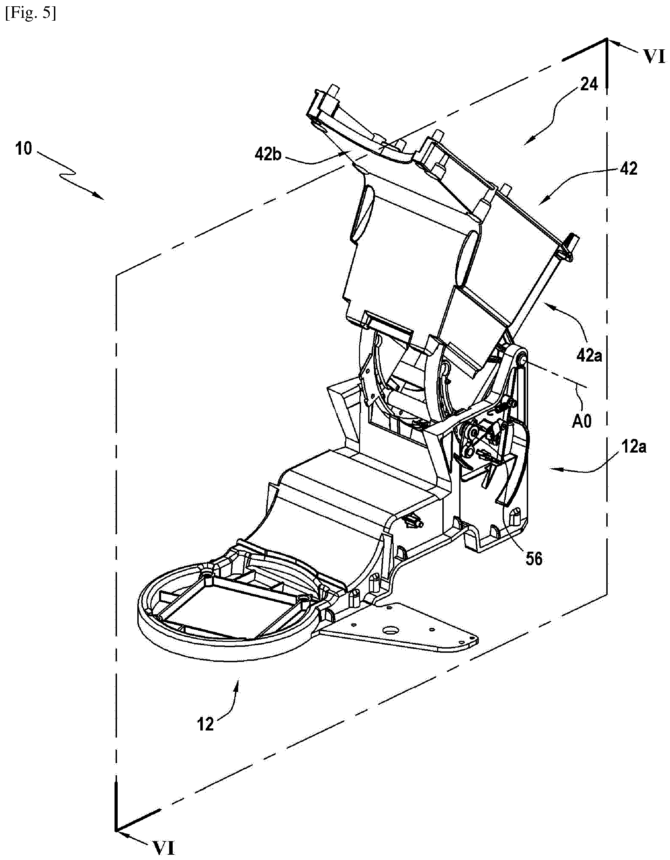

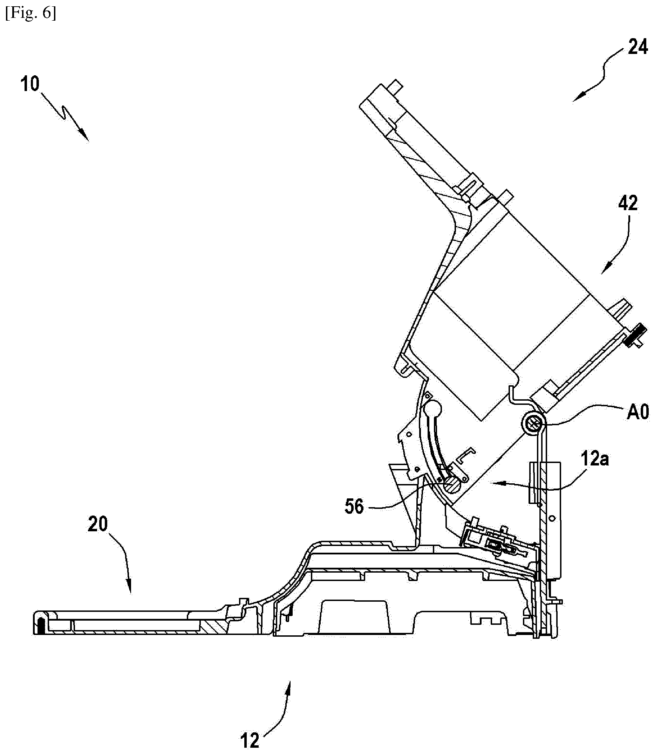

La tête 24 de l'appareil 10 est montée sur le socle 12 par une liaison de dégagement ayant au moins un degré de liberté de mouvement de telle sorte que la tête 24 est mobile par rapport au socle 12, selon une trajectoire de dégagement, entre une position de travail qui est illustrée par exemple sur les figures 1, 2 et 11, et une position dégagée, plus particulièrement visible sur les figures 5 et 6. L'entraineur principal 26 est entrainé porté par la tête 24. L'entraineur principal 26 est entrainé en rotation par le moteur principal 28. Dans la position dégagée, l'entraîneur principal 26 est plus éloigné de l'embase 14 que dans la position de travail. La position dégagée permet notamment de faciliter le montage/démontage d'un outil de travail principal sur l'entraîneur principal 26, et/ou permet de faciliter l'introduction d'aliments dans le bol de travail principal 22. Dans l'exemple, la liaison de dégagement est une articulation de dégagement autour d'un axe transversal horizontal A0 qui est donc perpendiculaire à la direction longitudinale d'extension de l'embase 14 du socle 12. Dans un tel cas, la trajectoire de dégagement de la tête 24 s'étend selon un arc de cercle autour de l'axe transversal horizontal A0, dans un plan transversal perpendiculaire à l'axe transversal horizontal A0. Cependant, la liaison de dégagement pourrait, en variante, comporter une glissière, aménagée entre la tête 24 et le socle 12, et permettant à la tête 24 de se déplacer par rapport au socle 12 selon une trajectoire verticale ou ayant une composante verticale. La liaison de dégagement pourrait être réalisée sous la forme d'un mécanisme plus complexe, comportant par exemple plusieurs articulations, par exemple de type quadrilatère déformable, ou une association d'une ou plusieurs articulations avec une ou plusieurs glissières.

Dans l'exemple illustré, la tête 24 présente une portion principale 24a qui s'étend sensiblement selon une direction longitudinale et horizontale, et une portion de liaison 24b, par laquelle elle est reliée au socle 12 par la liaison de dégagement, qui s'étend verticalement vers le bas depuis l'extrémité longitudinale arrière de la portion principale 24a. Ainsi, en position de travail, la portion principale 24a de la tête 24 s'étend longitudinalement vers l'avant en porte-à-faux par rapport à la portion de liaison 24b, et s'étend donc au-dessus de l'embase 14 du socle 12, jusqu'à venir au-dessus de la zone de réception de bol 20. Dans l'exemple illustré, l'entraîneur principal 26, qui porte l'outil de travail principal 30, est donc agencé à une extrémité longitudinale avant de la portion principale 24a de la tête 24, au niveau d'une face inférieure de celle-ci qui est tournée vers l'embase 14. L'entraîneur principal 26 est donc de préférence agencé verticalement à l'aplomb de la zone de réception de bol 20 du socle 12.

Dans l'exemple illustré à la [Fig.1], et de manière tout à fait optionnelle, l'appareil 10 comporte un panneau de commande 31 qui est porté par une structure latérale 31a qui est solidaire du socle 12 et qui comporte des éléments d'interface homme/machine, par exemple un écran et un bouton rotatif qui sont reliés à une unité électronique de commande de l'appareil. Cependant, les éléments d'interface homme/machine pour commander l'appareil pourraient prendre toute autre forme connue dans ce type d'appareil, et la structure latérale 31a est elle aussi optionnelle.

De manière connue, l'appareil 10 comporte une transmission mécanique de tête 32 qui est agencée dans la tête 24, qui est entraînée par l'arbre moteur 29 du moteur principal 28 et qui entraîne l'entraîneur principal 26 de manière qui puisse entrainer l'outil de travail principal 30 selon le mouvement de travail principal. Dans l'exemple illustré, la transmission mécanique de tête 32 est avantageusement assemblée sous la forme d'un sous-ensemble qui est susceptible d'être rapporté dans la tête 24 et qui sera décrit plus loin, notamment en référence à la [Fig.3] et à la [Fig.9].

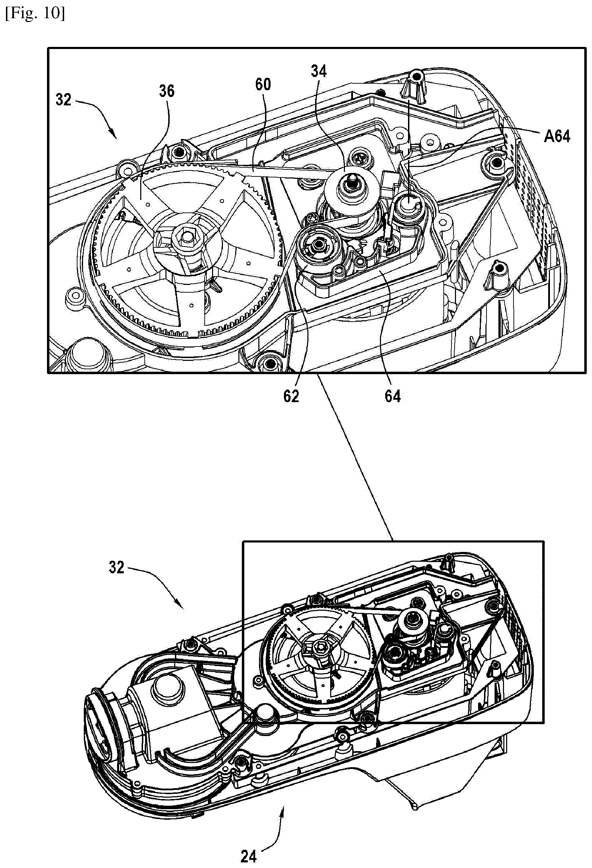

Dans l'exemple particulier qui est visible plus particulièrement sur la [Fig.9], l'arbre moteur 29 du moteur principal 28 porte un premier entraineur supérieur 46. La transmission mécanique de tête 32 entraîne un second entraineur supérieur 48. La transmission mécanique de tête 32 comporte une roue dentée d'entrée 34, mieux visible sur la [Fig.10], qui est montée sur l'arbre moteur 29 du moteur principal et qui est entraînée en rotation autour de son axe, ici vertical, par l'arbre moteur 29, et qui entraîne elle-même en rotation une roue dentée secondaire 36, elle aussi d'axe vertical. Sur la [Fig.10] le premier entraineur supérieur 46 et le second entraineur supérieur 48 ne sont pas représentés. La roue dentée secondaire 36 entraîne en rotation l'entraîneur principal 26 par l'intermédiaire d'une cascade de pignons 38. On note que, dans l'exemple illustré, l'appareil 10 comporte un entraîneur secondaire 40, qui est prévu pour émerger à l'extrémité longitudinale avant de la portion principale 24a de la tête 24, qui est rotatif autour d'un axe horizontal longitudinal A3, et qui est entraîné par la cascade de pignons 38 en même temps que l'entraîneur principal 26. Un tel entraîneur secondaire 40 peut être utilisé pour entraîner un outil de travail secondaire (non représenté) susceptible d'être monté à l'extrémité longitudinale avant de la tête 24. Cet entraîneur secondaire 40 peut, pour une même vitesse donnée de l'arbre moteur 29 du moteur principal 28, présenter une vitesse de rotation autour de son axe A3 qui est supérieure ou qui est inférieure à celle de l'entraîneur principal 26 autour de l'axe A1.

On comprend donc que, en fonctionnement de l'appareil, le moteur principal 28 entraîne l'outil de travail principal 30 dans son mouvement de travail, l'outil de travail principal 30 pouvant alors interagir avec des aliments placés dans le bol de travail principal 22. Dans le cadre d'un robot pâtissier, l'outil de travail principal 30 peut être un outil pétrin, prévu pour pétrir une pâte dans le bol de travail principal 22. De manière connue, le travail de pétrissage d'une pâte implique des efforts mécaniques importants, efforts mécaniques qui se répercutent sur la transmission mécanique de tête 32. De ce fait, la transmission mécanique de tête 32 doit être maintenue en place de manière solide dans la tête 24.

Comme on peut le voir sur les différentes figures, et notamment sur les figures 2 et 3, la tête 24 comprend un châssis structurel interne 42 qui est monté sur le socle 12 par la liaison de dégagement, en l'occurrence par une articulation de dégagement autour de l'axe A0, qui porte la transmission mécanique de tête 32 et qui porte l'entraîneur principal 26.

Ce châssis structurel interne 42 est conçu pour reprendre les efforts engendrés par l'outil de travail principal 30 sur l'entraîneur principal 26 et sur la transmission mécanique de tête 32 lors du fonctionnement de l'appareil 10, notamment lorsque l'outil de travail principal 30 interagit, de par son mouvement principal de travail, avec des aliments contenus dans le bol de travail principal 22. Ce châssis structurel interne 42 pourra être réalisé dans un matériau choisi pour ses capacités de résistance mécanique, par exemple en métal (par exemple par moulage d'aluminium ou autre matériau métallique) ou en matériau polymère, éventuellement chargé en particules de renfort, telles que des fibres ou des billes de verre. De même, la géométrie et la forme du châssis structurel interne 42 pourront être conçues en fonction des contraintes de résistance mécanique, et aussi en fonction des contraintes de fixation des différents éléments de la tête 24 sur ce châssis structurel interne 42.

En effet, en plus du châssis structurel interne 42, la tête 24 comporte un capotage de tête 44 qui est distinct du châssis structurel interne 42 et qui entoure le châssis structurel interne 42 et la transmission mécanique de tête 32. Ce capotage de tête 44 forme l'enveloppe externe visible de la tête 24 de l'appareil 10. Autrement dit, ce capotage de tête 44 présente, dans sa globalité, une face externe qui est la face visible de la tête 24 de l'appareil 10 pour un utilisateur de l'appareil 10.

Par conséquent, le capotage de tête 44 délimite un volume interne à l'intérieur duquel sont reçus le châssis structurel interne 42 et la transmission mécanique de tête 32.

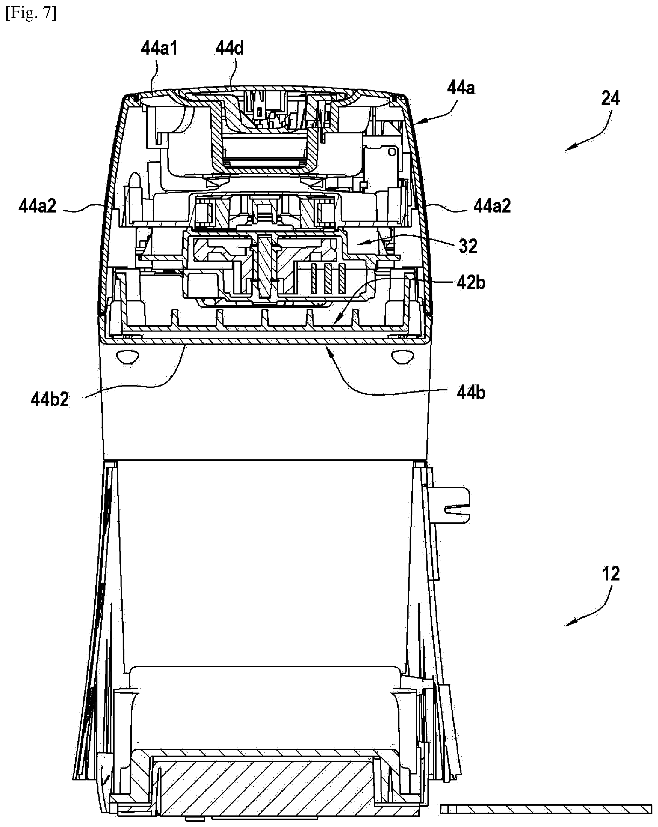

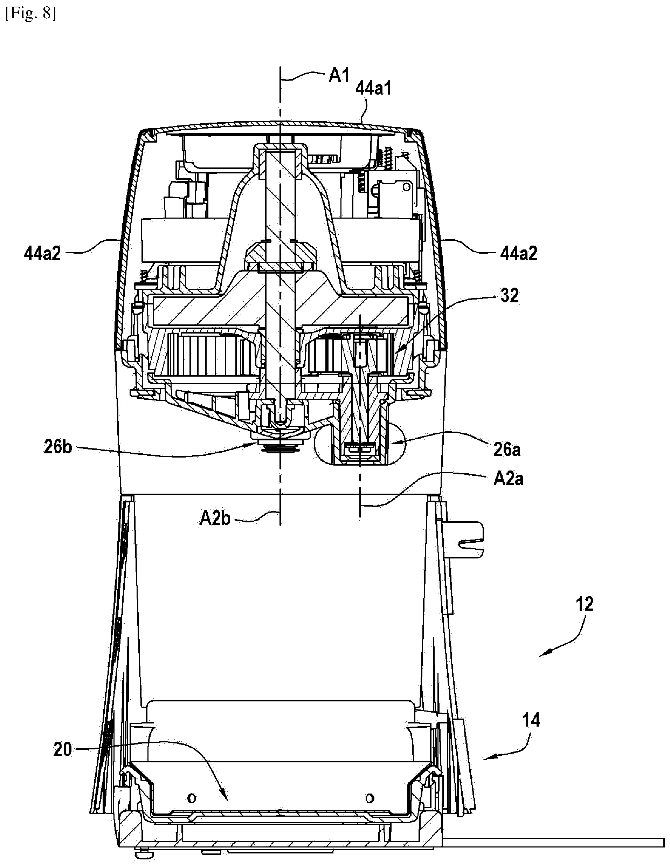

Comme on peut le voir sur les figures, notamment les figures 7 et 8, le capotage de tête 44 comporte une ou plusieurs parois délimitant le volume interne à l'intérieur duquel sont reçus le châssis structurel interne 42 et la transmission mécanique de tête 32. Les faces externes de ces parois, combinées entre elles, forment, pour un utilisateur, la face externe visible de la tête 24 de l'appareil 10.

Dans l'exemple qui est représenté sur les figures, on peut voir, notamment sur les figures 2, 3, 5, 6 et 11, que le châssis structurel interne 42 comporte une portion arrière 42a qui est liée à la liaison de dégagement, et une portion avant 42b qui s'étend longitudinalement vers l'avant depuis la portion arrière 42a du châssis structurel interne 42, en porte-à-faux au-dessus de l'embase 14 lorsque la tête 24 est en position de travail. Dans cet exemple, la portion arrière 42a du châssis structurel interne 42 fait donc partie de la portion principale 24a de la tête 24. Dans l'exemple, la portion arrière 42a du châssis structurel interne 42 délimite un logement 42c qui s'étend verticalement et qui reçoit le moteur principal 28. Le logement 42c est par exemple délimité par des parois latérales et des parois avant et arrière, et il est ouvert vers le haut. Dans l'exemple, le logement 42c peut présenter une ouverture vers le bas. La portion arrière 42a du châssis structurel interne 42 est, dans l'exemple de réalisation, celle au niveau de laquelle est agencée l'articulation de dégagement autour de l'axe A0 par laquelle la tête 24 est reliée au socle 12, et par laquelle la tête 24 peut pivoter autour de l'axe A0 de sa position de travail à sa position dégagée. En l'occurrence, la portion arrière 42a du châssis structurel interne 42 présente une extrémité inférieure par laquelle le châssis structurel interne 42 est monté sur le socle 12 par la liaison de dégagement, ici réalisée par l'articulation de dégagement autour de l'axe A0.

Dans l'exemple illustré, la portion de liaison 12a du socle 12 est décalée vers l'arrière selon la direction longitudinale de l'appareil, par rapport à la zone de réception de bol 20 de l'embase, et le châssis structurel interne 42 de la tête 24 est monté, ici par l'extrémité inférieure de sa portion arrière 42a, sur la portion de liaison 12a du socle 12 par la liaison de dégagement, ici réalisée par l'articulation de dégagement autour de l'axe A0.

Dans l'exemple illustré, le capotage de tête 44 est réalisé en plusieurs parties, ici en deux parties, ce que l'on voir notamment sur la [Fig.3].

À titre d'exemple, le capotage de tête 44 comporte une demi-coque supérieure 44a et une demi-coque inférieure 44b. La demi-coque supérieure 44a et la demi-coque inférieure 44b se rejoignent au niveau d'un plan de joint qui, dans cet exemple, s'étend dans un plan horizontal et qui présente ici un contour sensiblement oblong selon la direction longitudinale. Dans l'exemple, la demi-coque supérieure 44a présente une paroi supérieure 44a1, qui s'étend sensiblement dans un plan horizontal, et de parois latérales opposées 44a2, sensiblement parallèles l'une à l'autre, qui s'étendent chacune sensiblement dans un plan vertical et longitudinal, vers le bas depuis des bords longitudinaux de la paroi supérieure 44a1. À l'extrémité longitudinale avant de la demi-coque supérieure 44a, celle-ci présente une ouverture avant, ici pour l'accès à l'entraîneur secondaire 40, cette ouverture avant étant refermée par un couvercle avant 44c qui fait ici partie du capotage de tête 44 dans la mesure où il délimite le volume interne. L'extrémité longitudinale arrière est-elle aussi refermée par un élément paroi qui relie les deux parois latérales opposées 44a2 et la paroi supérieure 44a1. Dans l'exemple, la demi-coque supérieure 44a comporte, dans sa paroi supérieure 44a1, une ouverture supérieure 44a3, pour l'accès au premier entraîneur supérieur 46 et au second entraîneur supérieur 48, cette ouverture supérieure 44a3 étant refermée par un couvercle supérieur 44d qui fait ici aussi partie du capotage de tête 44 dans la mesure où il délimite lui aussi le volume interne.

Dans l'exemple illustré, la demi-coque inférieure 44b forme une paroi inférieure du capotage de tête 44 venant recouvrir par en dessous le châssis structurel interne 42 et la transmission mécanique de tête 32. Dans l'exemple, la demi-coque inférieure 44b présente une géométrie correspondant à la face inférieure de l'ensemble formé par le châssis structurel interne 42 et la transmission mécanique de tête 32. La demi-coque inférieure 44b présente ainsi une portion arrière 44b1 ayant une forme complémentaire de celle de la portion arrière 42a du châssis structurel interne 42, et elle entoure cette portion arrière 42a du châssis structurel interne 42. La portion arrière 44b1 de la demi-coque inférieure 44b du capotage de tête 44 forme, avec la portion arrière 42a du châssis structurel interne 42, la portion de liaison 24a de la tête 24. Par ailleurs, la demi-coque inférieure 44b présente une portion avant 44b2 sous la forme d'une paroi inférieure qui s'étend longitudinalement vers l'avant, dans un plan sensiblement horizontal, depuis la portion arrière 44b1 de la demi-coque inférieure 44b.

Lorsque les deux demi-coques sont assemblées pour former l'enveloppe externe de la tête 24, elles sont jointives au niveau de leur plan de joint. Le capotage de tête 44 qu'elles forment, dans l'exemple avec le couvercle avant 44c et avec le couvercle supérieur 44d en place, délimite le volume interne de la tête 24 dans lequel sont reçus la transmission mécanique de tête 32 et le châssis structurel interne 42. Ce capotage de tête 44 est sensiblement fermé de toute part, à l'exception d'une ouverture inférieure arrière 52 et d'une ouverture inférieure avant 54. L'ouverture inférieure arrière 52 est une ouverture vers le bas agencée au niveau de la portion arrière 44b1 de la demi-coque inférieure 44b1, qui est configurée pour permettre l'assemblage du châssis structurel interne 42 sur le socle 12 par la liaison de dégagement. À cet effet, une portion de liaison du châssis structurel interne 42 et/ou la portion de liaison 12a du socle 12 est engagée au travers de cette ouverture inférieure arrière 52, les deux portions de liaison étant liées l'une à l'autre par la liaison de dégagement. L'ouverture inférieure avant 54 est formée dans la portion avant 44b2 de la demi-coque inférieure 44b pour donner accès, depuis l'extérieur, à l'entraîneur principal 26. Dans cet exemple de réalisation, il n'est pas prévu de couvercle pour refermer l'ouverture inférieure avant 54, mais un tel couvercle pourrait être prévu pour refermer l'ouverture inférieure avant 54 lorsque l'entraîneur principal 26 n'est pas utilisé, donc lorsque aucun outil de travail principal 30 n'est engagé sur l'entraîneur principal 26.

Ainsi, le capotage de tête 44, dans son ensemble, forme une paroi périphérique qui entoure le châssis structurel interne 42 et la transmission mécanique de tête 32. Bien entendu, le capotage de tête 44 pourrait avoir une forme différente de celle illustrée. Dans l'exemple, le capotage de tête 44, présente, dans une partie avant qui est en surplomb au-dessus de l'embase 14, une forme sensiblement prismatique en section par un plan vertical et transversal, ce que l'on peut voir notamment sur la [Fig.7]. En alternative, le capotage de tête pourrait par exemple avoir, en section par un plan vertical et transversal, tout du moins dans sa partie avant en surplomb au-dessus de l'embase, une forme circulaire, une forme d'ovale, une forme d'ogive, une forme inférieure prismatique et une forme supérieure en dôme, etc....

Le capotage de tête 44 peut ainsi être conçu de manière indépendante ou quasi indépendante des efforts qui doivent être transmis entre l'outil de travail principal 30 et le socle 12 de l'appareil 10. De la sorte, la forme du capotage de tête 44, les matériaux constitutifs du capotage de tête 44 et les modes de fabrication du capotage de tête 44 peuvent être choisis plus librement, notamment pour répondre à des considérations esthétiques ou autres. Ainsi, on pourra aisément obtenir un capotage de tête 44 ayant un aspect de surface lisse. Typiquement, le capotage de tête 44 pourra être réalisé en tout ou partie avec des matériaux polymères sélectionnés pour leur aptitude au moulage de formes complexes et pour leur capacité d'obtention d'un état de surface particulièrement lisse. A contrario, les matériaux polymères sélectionnés n'auront pas nécessairement à répondre à une contrainte de résistance mécanique élevée, ni nécessairement à une aptitude au formage de pièces massives. Notamment, le capotage de tête 44 peut ainsi être constitué de parois minces, les parois minces présentant par exemple une épaisseur inférieure ou égale à 3 millimètres. La plus grande liberté de conception des formes du capotage de tête 44 peut être mise à profit pour donner à la tête 24 des formes externes plus favorables à un nettoyage externe aisé pour la tête 24, au bénéfice de l'hygiène.

Bien entendu, le capotage de tête 44 n'est pas nécessairement entièrement fermé, comme on l'a vu ci-dessus en rapport avec la présence de l'ouverture inférieure arrière 52 et de l'ouverture inférieure avant 54. D'autres ouvertures peuvent être prévues.

Tout d'abord, on pourra prévoir une ou plusieurs ouvertures permettant par exemple d'assurer une ventilation interne, par exemple autour du moteur principal 28. De telles ouvertures peuvent être réalisées sous la forme d'ouïes d'aération.

De même, l'appareil 10 peut comporter un mécanisme de verrouillage de la tête 24 en position de travail et/ou en position dégagée. Dans certains modes de réalisation, un tel mécanisme de verrouillage pourrait être porté par le châssis structurel interne 42 de la tête 24. Dans un tel cas, le capotage de tête 44 pourrait comporter avantageusement une ouverture pour le passage d'un organe de manœuvre du mécanisme de verrouillage qui serait destiné à être manipulé par un utilisateur.

De manière générale, le capotage de tête 44 pourra être fixé au moins en partie sur le châssis structurel interne 42, avec par exemple des pattes de fixation, solidaires des différentes parties du capotage de tête 44 et assemblées par tous moyens connus, par exemple par vissage, par collage ou par rivetage, sur le châssis structurel interne 42, soit de manière directe, soit par l'intermédiaire de pièces de liaison. De la sorte, le capotage de tête 44 sera mobile avec le châssis structurel interne 42 lorsque la tête 24 passe de l'une à l'autre de sa position de travail et de sa position dégagée. Dans l'exemple illustré, le capotage de tête 44 est fixe par rapport au châssis structurel interne 42, y compris lorsque la tête 24 est déplacée selon le mouvement de dégagement entre sa position de travail et sa position dégagée. Cependant, on pourrait prévoir une possibilité de mouvement relatif entre le capotage de tête 44 et le châssis structurel interne 42, notamment lorsque la tête 24 est déplacée selon le mouvement de dégagement entre sa position de travail et sa position dégagée, par exemple pour éviter qu'une interférence entre ces deux éléments n'entrave le mouvement de dégagement.

Comme on peut le voir plus particulièrement sur les figures 3 et 9, la transmission mécanique de tête 32 comporte un châssis intermédiaire 58, qui est configuré pour être fixé sur le châssis structurel interne 42 de la tête 24 afin que la transmission mécanique de tête 32 soit portée par le châssis structurel interne 42 par l'intermédiaire du châssis intermédiaire 58. Ainsi, par exemple, les différents composants de la transmission mécanique de tête 32 qui, en fonctionnement de l'appareil 10, sont mobiles en même temps que le moteur principal 28 et l'entraîneur principal 26, tels que par exemple la roue dentée d'entrée 34, la roue dentée secondaire 36, et la cascade de pignons 38, sont portés par le châssis intermédiaire 58. Le châssis intermédiaire 58 est composé d'une ou de plusieurs pièces qui, en fonctionnement de l'appareil 10, sont fixes. Dans l'exemple, le châssis intermédiaire 58 comporte par exemple une plaque supérieure 58a, une plaque médiane 58b qui est configurée pour porter notamment la roue dentée d'entrée 34 la roue dentée secondaire 36, et une plaque inférieure 58c, qui est configurée pour porter au moins l'entraîneur principal 26, et par exemple au moins une partie de la cascade de pignons 38.

On note donc que, dans l'exemple illustré, l'entraineur principal 26 est lui aussi porté, avec capacité de rotation autour de l'axe A1, par le châssis intermédiaire 58 de la transmission mécanique de tête 32, en l'occurrence par la plaque inférieure 58c, directement ou indirectement. De même, l'entraîneur secondaire 40 peut lui aussi être porté, avec capacité de rotation autour de l'axe A3, par le châssis intermédiaire 58, en l'occurrence par la plaque médiane 58b. Similairement, le premier entraîneur supérieur 46 et le second entraîneur supérieur 48 sont portés par le châssis intermédiaire 58, en l'occurrence par la plaque supérieure 58a. Les différentes pièces du châssis intermédiaire 58 sont fixées l'une à l'autre de manière à former un ensemble rigide susceptible de porter les composants mobiles de la transmission mécanique de tête 32 dans un état préassemblé, avant le montage du châssis intermédiaire 58 sur le châssis structure interne 42. Le châssis intermédiaire 58 de la transmission mécanique de tête 32 peut être réalisé avec des matériaux et des procédés de fabrication identiques ou similaires à ceux mis en œuvre pour le châssis structurel interne 42 de la tête 24. Ainsi, la transmission mécanique de tête 32, dont notamment ses composants mobiles, peut être préassemblée sur son châssis intermédiaire 58, de manière à former un ensemble autonome rigide qui est apte à être ensuite fixé en un nombre minimal d'étapes, éventuellement une seule étape, sur le châssis structurel interne 42. Cela permet notamment de maîtriser au mieux l'assemblage des composants de la transmission mécanique de tête 32 qui, en fonctionnement de l'appareil 10, sont mobiles en même temps que le moteur principal 28 et l'entraîneur principal 26, et qui doivent donc être assemblés soigneusement, avec des tolérances de positionnement suffisamment précises.

Grâce à son montage sur son châssis intermédiaire 58, la transmission mécanique de tête 32 peut être préassemblée, testée et vérifiée avant sa fixation sur le châssis structurel interne 42.

On a illustré sur la [Fig.10] que, dans l'exemple illustré, la roue dentée d'entrée 34 de la transmission mécanique de tête 32 entraîne la roue dentée secondaire 36 par l'intermédiaire d'une courroie crantée 60. Avantageusement, la courroie crantée 60 peut être mise en tension par un galet tendeur 62 soumis à l'action d'un ressort. Ici, le galet tendeur 62 est porté par une extrémité distale d'un bras pivotant 64 qui est articulé, par une extrémité proximale opposée à son extrémité distale, autour d'un axe A64 de rotation du bras sur le châssis intermédiaire 58. Un ressort, par exemple un ressort à action angulaire autour de l'axe A64 de rotation du bras, presse le bras 64 et donc le galet tendeur 62 contre la courroie 60 pour la mettre en tension entre la roue dentée d'entrée 34 et la roue dentée secondaire 36. Ainsi, la courroie 60 peut être tendue manière optimale indépendamment de la position relative des axes de rotation respectifs de la roue dentée d'entrée 34 et de la roue dentée secondaire 36. Grâce à cette indépendance, on gagne un degré de liberté dans le positionnement relatif de ces deux composants. Ainsi, on peut prévoir que la roue dentée d'entrée 34 soit portée par l'arbre moteur 29 du moteur principal 28 et qu'il soit possible d'aligner l'arbre moteur 29 avec le premier entraîneur supérieur 46, sans induire de contraintes supplémentaires en termes de positionnement relatif entre la roue dentée d'entrée 34 et la roue dentée secondaire 36. Cela permet de simplifier considérablement les opérations de montage, en limitant le nombre et la complexité des opérations de réglage après montage.

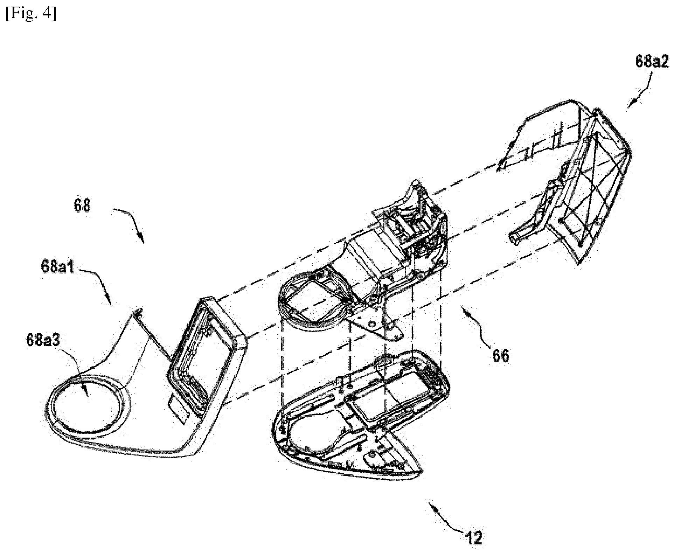

De manière similaire à ce qui a été prévu pour la tête 24, on peut prévoir que, comme on peut le voir notamment sur la [Fig.4], le socle 12 comporte lui aussi un châssis structurel, qui sera ci-après appelé châssis structurel inférieur 66, et un capotage de socle 68 qui est distinct du châssis structurel inférieur 66 et qui recouvre en tout ou partie le châssis structurel inférieur 66.

Ce châssis structurel inférieur 66 est conçu pour reprendre les efforts engendrés sur le socle 12 par la tête 24 au niveau de la liaison de dégagement, ces efforts étant engendrés notamment par ceux exercés par l'outil de travail principal 30 sur l'entraîneur principal 26 et sur la transmission mécanique de tête 32 lors du fonctionnement de l'appareil 10. Ce châssis structurel inférieur 66 pourra être réalisé dans un matériau choisi pour ses capacités de résistance mécanique, par exemple en métal (par exemple par moulage d'aluminium ou autre matériau métallique) ou en matériau polymère, éventuellement chargé en particules de renforts, telles que des fibres ou des billes de verre. De même, la géométrie et la forme du châssis structurel inférieur 66 pourront être conçues en fonction des contraintes de résistance mécanique.

Le capotage de socle 68 forme l'enveloppe externe visible du socle de l'appareil 10, au moins pour la partie visible pour l'utilisateur en fonctionnement de l'appareil.

Dans l'exemple qui est représenté sur les figures, le châssis structurel inférieur 66 comporte une portion de liaison, ici une portion arrière 66a, qui porte la liaison de dégagement, et une portion avant 66b qui s'étend longitudinalement vers l'avant depuis la portion arrière 66a du châssis structurel inférieur 66 pour recouvrir l'embase 14.

De préférence, la portion avant 66b du châssis structurel inférieur 66 comporte aussi la griffe de fixation du bol de travail principal 22, qui est agencée au niveau de la zone de réception de bol 20 du socle 12. Dans un tel cas, on obtient que la chaine de transmission des efforts de préparation culinaire, qui sont les efforts engendrés par le travail effectué par l'outil de travail principal 30 sur les aliments contenus dans le bol de travail principal 22 en fonctionnement de l'appareil 10, sont repris d'une part par le châssis structurel interne 42 de la tête 24 et d'autre part par le châssis structurel inférieur du socle 12, qui sont liés l'un à l'autre, sans que ces efforts de préparation culinaire ne transitent ni par le capotage de tête 44, ni par le capotage de socle 68, ou en tout cas pas de manière notable.

Dans l'exemple illustré, la portion arrière 66a du châssis structurel inférieur 66 s'étend verticalement vers le haut par rapport à l'embase 14 et elle forme la partie structurelle de la portion de liaison 12a du socle 12 en ce sens qu'elle est, dans l'exemple de réalisation, la partie comprenant la liaison de dégagement, ici l'articulation de dégagement autour de l'axe A0. En l'occurrence, la portion arrière 66a du châssis structurel inférieur 66 présente une extrémité supérieure sur laquelle le châssis structurel interne 42 de la tête 24 est monté sur le socle 12 par la liaison de dégagement, ici réalisée par l'articulation de dégagement autour de l'axe A0.

Dans l'exemple illustré on a vu que le moteur principal 28 est porté par la tête 24. Pour le cas dans lequel le moteur principal serait porté par le socle 12, on pourrait prévoir que le moteur principal soit porté par le châssis structurel inférieur 66 du socle 12.

Dans l'exemple illustré, on peut voir que le capotage de socle 68 est réalisé en plusieurs parties. À titre d'exemple, le capotage de socle 68 comporte une demi-coque supérieure 68a et une demi-coque inférieure 68b, cette dernière étant optionnelle. Plus précisément, la demi-coque supérieure 68a est, dans l'exemple, réalisée elle-même en deux parties, à savoir une demi-coque supérieure avant 68a1 et une demi-coque supérieure arrière 68a2

Dans l'exemple, la demi-coque supérieure 68a recouvre entièrement le châssis structurel inférieur 66, à l'exception d'une ouverture supérieure avant 68a3 qui donne accès à la zone de fixation de bol 20, et qui est ici aménagée dans la demi-coque supérieure avant 68a1. L'ouverture supérieure avant 68a3 donne accès à la griffe de fixation du châssis structurel inférieur 66 qui est prévue pour la fixation mécanique du bol de travail principal 22 sur le socle 12. Dans l'exemple, la demi-coque supérieure 68a recouvre le châssis structurel inférieur 66 et forme la face externe visible à la fois pour l'embase 14 du socle 12 et pour la portion de liaison 12a du socle 12. La demi-coque supérieure avant 68a1 du capotage de socle 68 recouvre l'embase 14, et comporte l'ouverture supérieure avant 68a3 pour l'accès à la zone de réception de bol 20. La demi-coque supérieure arrière 68a2 entoure la partie arrière 66a du châssis structurel inférieur 66, la demi-coque supérieure arrière 68a2 et la partie arrière 66a du châssis structurel 66 forment la portion de liaison 12a du socle 12. Cette demi-coque supérieure 68a est, au niveau de la portion de liaison 12a du socle 12, ouverte vers le haut pour permettre l'assemblage du châssis structurel interne 42 de la tête 24 sur le châssis structurel inférieur 66 du socle 12, par la liaison de dégagement. À cet effet, la portion arrière 42a du châssis structurel interne 42 de la tête 24, qui forme donc une portion de liaison, et/ou la portion arrière 66a du châssis structurel inférieur 66 du socle 12, qui forme une autre portion de liaison, est engagée au travers de cette ouverture, les deux portions de liaison étant liées l'une à l'autre par la liaison de dégagement.

Dans l'exemple illustré, la demi-coque inférieure 68b du capotage de socle 68 forme une paroi inférieure du capotage de socle 68 venant recouvrir, par en dessous, le châssis structurel inférieur 66.

Dans l'exemple illustré, les différentes parties du capotage de socle 68, lorsqu'elles sont assemblées, délimitent un volume interne du socle 12 dans lequel est reçu le châssis structurel inférieur 66. Ce capotage de socle 68 est sensiblement fermé de toute part, à l'exception de l'ouverture supérieure avant 68a3 et de l'ouverture supérieure arrière au niveau de la portion de liaison 12a du socle 12.

Le capotage de socle 68 peut ainsi être conçu de manière indépendante ou quasi indépendante des efforts qui doivent être transmis au socle 12 de l'appareil 10. De la sorte, tout comme pour le capotage de tête 44, la forme du capotage de socle 68, les matériaux constitutifs du capotage de socle 68 et les modes de fabrication du capotage de socle 68 peuvent être choisis plus librement, notamment pour répondre à des considérations esthétiques ou autres. Notamment, le capotage de socle 68 peut ainsi être constitué de parois minces, les parois minces présentant par exemple une épaisseur inférieure ou égale à 3 millimètres.

Bien entendu, le capotage de socle 68 n'est pas nécessairement entièrement fermé. On pourra prévoir une ou plusieurs ouvertures permettant par exemple d'assurer une ventilation, par exemple sous la forme d'ouïes d'aération. De telles ouvertures seront cependant de préférence agencées du côté de la face inférieure 18 du socle 12, pour limiter l'intrusion de matière indésirable, notamment d'aliments, dans le volume délimité entre le capotage de socle 68 et le châssis structurel inférieur 66.

De même, l'appareil 10 illustré comporte, comme cela est visible à la [Fig.6], un mécanisme de verrouillage 56 de la tête 24 en position de travail et/ou en position dégagée. Dans le mode de réalisation, un tel mécanisme de verrouillage est porté par le châssis structurel inférieur 66. Le capotage de socle 68 comporte avantageusement une ouverture pour le passage d'un organe de manœuvre du mécanisme de verrouillage 56 qui est destiné à être manipulé par un utilisateur.

De manière générale, le capotage de socle 68 pourra être fixé au moins en partie sur le châssis structurel inférieur 66, avec par exemple des pattes de fixation qui solidaires des différentes parties du capotage de socle 68 et qui sont assemblées par tous moyens connus, par exemple par vissage, par collage ou par rivetage, sur le châssis structurel inférieur 66, soit de manière directe, soit par l'intermédiaire de pièces de liaison. De la sorte, le capotage de socle 68 est immobile, avec le châssis structurel inférieur 66, lorsque la tête 24 passe de l'une à l'autre de sa position de travail et de sa position dégagée.

Le châssis structurel inférieur 66 pourra comporter un piètement par lequel le socle 12 est destiné à reposer sur une surface d'accueil. Ce piètement peut comporter par exemple plusieurs pieds. En cas de présence d'une demi-coque inférieure 68b, ce piètement peut émerger vers le bas, à l'extérieur du capotage de socle 68, au travers d'une ou plusieurs ouvertures aménagées dans la demi-coque inférieure 68b.

De préférence, le capotage de tête 44 et le capotage de socle 68 se raccordent avec affleurement au niveau de la liaison de dégagement, tout en étant configurés pour ne pas former obstacle au mouvement de dégagement assuré par la liaison de dégagement.

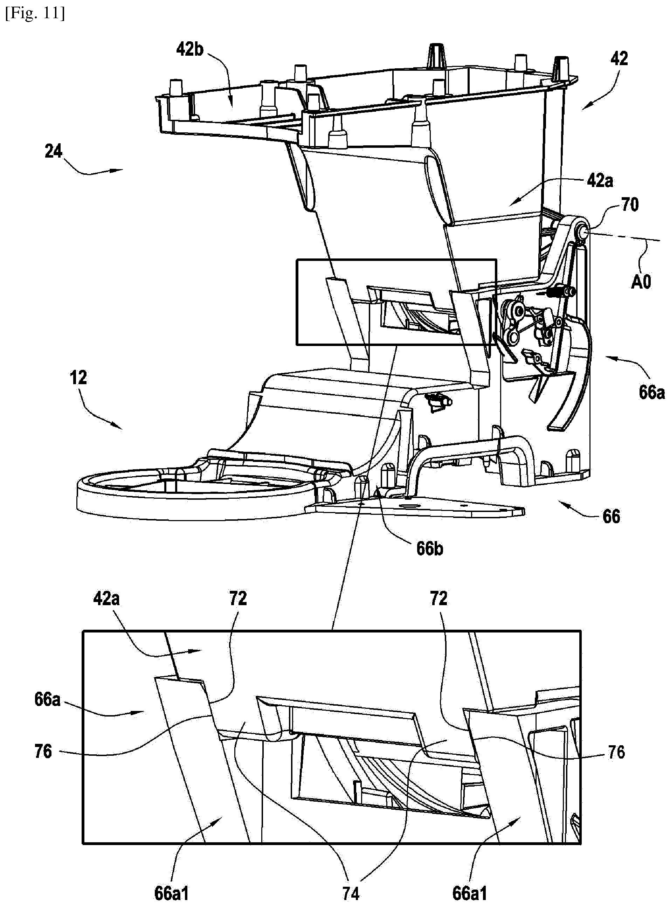

Sur la [Fig.5] et sur la [Fig.11], on a illustré plus particulièrement la manière dont le châssis structurel interne 42 de la tête 24 est susceptible de coopérer avec le socle 12, plus particulièrement dans l'exemple illustré avec le châssis structurel inférieur 66 du socle 12, pour éliminer ou réduire des jeux parasites entre les deux pièces, notamment lorsque la tête 24 est en position de travail dans laquelle des efforts dus au fonctionnement de l'appareil 10 sont susceptibles d'être transmis entre la tête 24 et le socle 12.

De manière générale, le châssis structurel interne 42 comporte des éléments de forme qui, dans la position de travail, coopèrent avec des éléments de forme complémentaires du socle 12 pour limiter des débattements de la tête 24 selon au moins une direction perpendiculaire à la trajectoire de dégagement de la tête 24 entre sa position de travail et sa position dégagée, la trajectoire de dégagement étant définie par la liaison de dégagement.

Dans l'exemple illustré, tel qu'on peut le voir notamment sur la [Fig.11], la liaison de dégagement comprend un montage en chape de l'extrémité inférieure la portion arrière 42a du châssis structurel interne 42 avec la portion de liaison du socle 12, ici plus particulièrement avec la partie arrière 66a du châssis structurel inférieur 66. Dans l'exemple, la partie arrière 66a du châssis structurel inférieur 66 présente deux flancs latéraux 66a1 qui s'étendent chacun dans un plan longitudinal et vertical vers le haut. L'extrémité inférieure de la portion arrière 42a du châssis structurel interne 42 est reçue entre les deux flancs latéraux 66a1. L'extrémité inférieure de la portion arrière 42a du châssis structurel interne 42 et les deux flancs latéraux 66a1 sont traversés par un arbre cylindrique 70 dont l'axe est l'axe A0 de l'articulation de dégagement. L'arbre cylindrique 70 est agencé à proximité d'une face arrière tant de la partie arrière 66a du châssis structurel inférieur 66 que de la portion arrière 42a du châssis structurel interne 42 de la tête 24. Au niveau d'une face avant de la partie arrière 66a du châssis structurel inférieur 66, les deux flancs latéraux 66a1 présentent chacun un élément de surface vertical 72, les deux éléments de surface verticaux 72 se faisant face transversalement en vis-à-vis l'un de l'autre. À l'inverse, au niveau d'une face avant de l'extrémité inférieure de la portion arrière 42a du châssis structurel interne 42 de la tête 24, on trouve deux projections verticales vers le bas 74 dont la géométrie et le positionnement leur permet de s'engager verticalement et transversalement entre les deux éléments de surface verticaux 72 des deux flancs latéraux 66a1. Chaque projection verticale vers le bas 74 comporte notamment une face verticale 76 qui fait face à l'élément de surface vertical 72 du flanc latéral 66a1 le plus proche. Les deux faces verticales 76 des deux projections verticales vers le bas 74 sont tournées à l'opposé l'une de l'autre et sont écartées transversalement l'une de l'autre d'une distance inférieure ou égale à la distance séparant les éléments de surface verticaux 72 des deux flancs latéraux 66a1, avec un jeu le plus réduit possible. Lorsque la tête 24 est en position de travail par rapport au socle 12, les projections verticales vers le bas 74, qui sont liées à la tête 24, préférentiellement de manière rigide, sont engagées verticalement et transversalement entre les deux éléments de surface verticaux 72 des deux flancs latéraux 66a1 liés au socle 12, préférentiellement de manière rigide. Ainsi, par coopération des faces verticales opposées 76 des projections verticales vers le bas 74 avec les éléments de surface verticaux 72 des deux flancs latéraux 66a1, on obtient une limitation des débattements de la tête 24 selon la direction transversale de l'axe A0 de l'articulation de dégagement. Comme les projections verticales vers le bas 74 et les deux éléments de surface verticaux 72 des deux flancs latéraux 66a1 sont décalés selon la direction longitudinale par rapport à l'axe transversal A0 de l'articulation dégagement, ces formes complémentaires bloquent aussi toute possibilité de rotation de la tête 24 par rapport au socle 12 autour d'un axe vertical. Ceci permet notamment de concevoir une articulation de dégagement qui peut présenter des jeux radiaux autour de son axe A0, donc permettant une fabrication et un assemblage facilité, tout en bloquant les mouvements parasites principaux susceptibles d'apparaître entre la tête 24 et le support 12 en fonctionnement de l'appareil 10.

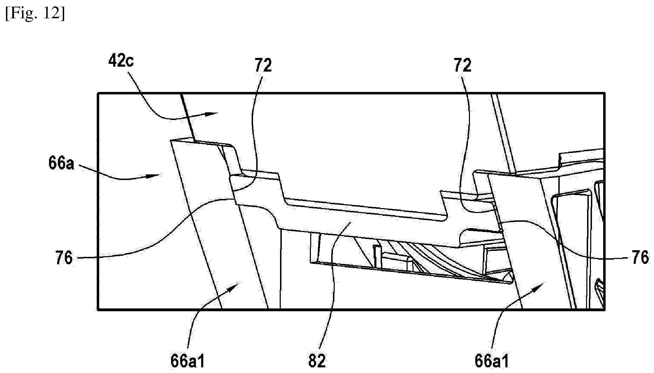

La [Fig.12] illustre une variante de réalisation se différenciant de la réalisation illustrée sur la [Fig.11] en ce que les faces verticales opposées 76 appartiennent à une traverse 82 rapportée sous un corps principal 42c du châssis structurel interne 42. La traverse 82 peut par exemple être formée par une pièce métallique assemblée avec le corps principal 42c formé par une pièce en matériau polymère, les deux flancs latéraux 66a1 du châssis structurel intérieur 66 pouvant également être réalisés en métal. Lorsque la tête 24 est en position de travail par rapport au socle 12, les faces verticales opposées 76 de la traverse 82, qui sont liées à la tête 24, préférentiellement de manière rigide, sont engagées verticalement et transversalement entre les deux éléments de surface verticaux 72 des deux flancs latéraux 66a1 liés au socle 12, préférentiellement de manière rigide. Ainsi, par coopération des faces verticales opposées 76 de la traverse 82 avec les éléments de surface verticaux 72 des deux flancs latéraux 66a1, on obtient une limitation des débattements de la tête 24 selon la direction transversale de l'axe A0 de l'articulation de dégagement.

## Revendications

1. Appareil (10) électroménager de préparation culinaire, du type comprenant :
. un socle (12) présentant une embase (14) ayant une face inférieure (18) par laquelle le socle (12) est destiné à reposer sur une surface d'accueil et une face supérieure sur laquelle est aménagée une zone de réception de bol (20) configurée pour recevoir un bol de travail principal (22),
. un moteur principal (28) ayant un arbre moteur (29) orienté selon un axe moteur,
. une tête (24), liée au socle (12), la tête (24) ayant un entraîneur principal (26) qui est agencé sous la tête (24) en regard de la zone de réception de bol (20) de l'embase (14), qui est entraîné en rotation par le moteur principal (28), et qui est configuré pour entraîner un outil de travail principal (30) selon un mouvement de travail principal,
l'appareil (10) étant du type dans lequel la tête (24) est montée sur le socle (12) par une liaison de dégagement ayant au moins un degré de liberté de mouvement de telle sorte que la tête (24) est mobile par rapport au socle (12) entre une position de travail et une position dégagée dans laquelle l'entraîneur principal (26) est plus éloigné de l'embase (14) que dans la position de travail,
l'appareil (10) étant du type dans lequel l'appareil (10) comporte une transmission mécanique de tête (32) qui est agencée dans la tête (24), qui est entraînée par l'arbre moteur (29) du moteur principal (28) et qui entraîne l'entraîneur principal (26) selon le mouvement de travail principal,
la tête (24) comprenant un châssis structurel interne (42) qui est monté sur le socle (12) par la liaison de dégagement, le châssis structurel interne (42) portant la transmission mécanique de tête (32) et l'entraîneur principal (26), la tête (24) comportant un capotage de tête (44) qui est distinct du châssis structurel interne (42) de la tête (24) et qui entoure le châssis structurel interne (42) de la tête (24) et la transmission mécanique de tête (32), **caractérisé en ce que** la transmission mécanique de tête (32) comporte un châssis intermédiaire (58) configuré pour être fixé sur le châssis structurel interne (42) et **en ce que** la transmission mécanique de tête (32) est portée par le châssis structurel interne (42) par l'intermédiaire du châssis intermédiaire (58).

2. Appareil (10) selon la revendication 1, **caractérisé en ce que** le capotage de tête (44) délimite un volume interne à l'intérieur duquel sont reçus le châssis structurel interne (42) de la tête (24) et la transmission mécanique de tête (32).

3. Appareil (10) selon l'une quelconque des revendications précédentes, **caractérisé en ce que** le capotage de tête (44) comporte une ou plusieurs parois (44a1, 44a2, 44c, 44d) délimitant le volume interne à l'intérieur duquel sont reçus le châssis structurel interne (42) de la tête (24) et la transmission mécanique de tête (32).

4. Appareil (10) selon l'une quelconque des revendications précédentes, **caractérisé en ce que** le capotage de tête (44) comporte une paroi supérieure (44a1), une paroi inférieure (44b2) et deux parois latérales (44a2) reliant la paroi supérieure (44a1) à la paroi inférieure (44b2), le châssis structurel interne (42) de la tête (24) et la transmission mécanique de tête (32) étant reçus entre la paroi supérieure (44a1) et la paroi inférieure (44b2) du capotage de tête (44) et entre les deux parois latérales (44a2) du capotage de tête (44).

5. Appareil (10) selon l'une quelconque des revendications précédentes, **caractérisé en ce que** le capotage de tête (44) comporte une paroi périphérique qui entoure le châssis structurel interne (42) de la tête (24) et la transmission mécanique de tête (32).

6. Appareil (10) selon l'une quelconque des revendications précédentes, **caractérisé en ce que** le capotage de tête (44) comporte une ouverture (54) pour l'entraîneur principal (26).

7. Appareil (10) selon l'une quelconque des revendications précédentes, **caractérisé en ce que** le capotage de tête (44) est fixé au moins en partie sur le châssis structurel interne (42) de la tête (24).

8. Appareil (10) selon l'une quelconque des revendications précédentes, **caractérisé en ce que** le capotage de tête (44) est réalisé en plusieurs parties (44a, 44b).

9. Appareil (10) selon l'une des revendications précédentes, **caractérisé en ce que** l'entraîneur principal (26) est porté par le châssis intermédiaire (58) de la transmission mécanique de tête (32).

10. Appareil (10) selon l'une quelconque des revendications précédentes, **caractérisé en ce que** le moteur principal (28) est porté par le châssis structurel interne (42) de la tête (24).

11. Appareil (10) selon l'une quelconque des revendications précédentes, **caractérisé en ce que** le socle (12) comporte une portion de liaison (12a) qui est décalée de la zone de réception de bol (20), vers l'arrière selon une direction longitudinale de l'appareil (10), et **en ce que** le châssis structurel interne (42) de la tête (24) est monté sur la portion de liaison (12a) du socle (12) par la liaison de dégagement.

12. Appareil (10) selon l'une quelconque des revendications précédentes, **caractérisé en ce que** la liaison de dégagement comprend au moins une articulation autour d'un axe horizontal (A0).

13. Appareil (10) selon l'une quelconque des revendications précédentes, **caractérisé en ce que** le châssis structurel interne (42) de la tête (24) comporte des éléments de forme (74, 76) qui, dans la position de travail, coopèrent avec des éléments de forme complémentaires (72) du socle (12) pour limiter des débattements de la tête (24) selon au moins une direction perpendiculaire à une trajectoire de dégagement de la tête (24) entre sa position de travail et sa position dégagée, la trajectoire de dégagement étant définie par la liaison de dégagement.

14. Appareil (10) selon l'une quelconque des revendications précédentes, **caractérisé en ce que** le socle (12) comporte un châssis structurel inférieur (66) ayant une griffe de fixation du bol de travail principal (22), **en ce que** le châssis structurel inférieur (66) du socle (12) comporte une portion de liaison qui porte la liaison de dégagement,
et **en ce que** le socle (12) comporte un capotage de socle (68) qui est distinct du châssis structurel inférieur (66) et qui recouvre par au-dessus le châssis structurel inférieur (66).

15. Appareil (10) selon l'une des revendications précédentes, **caractérisé en ce que** l'arbre moteur (29) porte un premier entraîneur supérieur (46).

16. Appareil (10) selon l'une des revendications précédentes, **caractérisé en ce que** la transmission mécanique de tête (32) comporte une roue dentée d'entrée (34) montée sur l'arbre moteur (29) et **en ce que** la roue dentée d'entrée (34) entraîne une roue dentée secondaire (36).

17. Appareil (10) selon l'une des revendications précédentes, **caractérisé en ce que** la transmission mécanique de tête (32) comporte différents composants mobiles en même temps que le moteur principal (28) et que l'entraîneur principal (26), qui sont portés par le châssis intermédiaire (58).

## Patentansprüche

1. Elektrisches Haushaltsgerät zur Zubereitung von Speisen (10), der Art bestehend aus:
. einem Sockel (12) mit einem Fußteil (14), das eine Unterseite (18) aufweist, durch die der Sockel (12) auf einer Tragfläche ruhen soll und einer Oberseite, auf der ein Bereich zur Aufnahme der Schüssel (20) eingerichtet ist, konfiguriert, um eine Hauptarbeitsschüssel (22) aufzunehmen,
. einem Hauptmotor (28) mit einer Motorwelle (29), die entlang einer Motorachse ausgerichtet ist,
. einem Kopf (24), der mit dem Sockel (12) verbunden ist, der Kopf (24) weist einen Hauptantrieb (26) auf, der unter dem Kopf (24) gegenüber dem Bereich zur Aufnahme der Schüssel (20) des Fußteils (14) angeordnet ist, der durch den Hauptmotor (28) in Rotation versetzt wird und konfiguriert ist, um ein Hauptarbeitsgerät (30) in einer Hauptarbeitsbewegung anzutreiben,
wobei das Gerät (10) der Art ist, bei dem der Kopf (24) auf dem Sockel (12) durch eine Lösungsverbindung montiert ist, die mindestens einen Bewegungsfreiheitsgrad aufweist, sodass der Kopf (24) relativ zum Sockel (12) zwischen einer Arbeitsposition und einer Gelöst-Position beweglich ist, in der der Hauptantrieb (26) weiter vom Fußteil (14) entfernt ist als in der Arbeitsposition,
wobei das Gerät (10) der Art ist, bei dem das Gerät (10) eine mechanische Übertragung im Kopf (32) umfasst, die im Kopf (24) angeordnet ist, die von der Motorwelle (29) des Hauptmotors (28) angetrieben wird und den Hauptantrieb (26) in der Hauptarbeitsbewegung antreibt,
wobei der Kopf (24) einen internen Strukturrahmen (42) umfasst, der durch die Lösungsverbindung auf dem Sockel (12) montiert ist, der interne Strukturrahmen (42) trägt die mechanische Übertragung im Kopf (32) und den Hauptantrieb (26),
wobei der Kopf (24) eine Kopfabdeckung (44) aufweist, die sich vom internen Strukturrahmen (42) des Kopfes (24) unterscheidet und den internen Strukturrahmen (42) des Kopfes (24) und die mechanische Übertragung im Kopf (32) umgibt, **dadurch gekennzeichnet, dass** die mechanische Übertragung im Kopf (32) einen Zwischenrahmen (58) umfasst, der konfiguriert ist, um auf dem internen Strukturrahmen (42) befestigt zu werden, und dass die mechanische Übertragung im Kopf (32) durch den Zwischenrahmen (58) vom internen Strukturrahmen (42) getragen wird.

2. Gerät (10) gemäß Anspruch 1, **dadurch gekennzeichnet, dass** die Kopfabdeckung (44) ein Innenvolumen definiert, in dem der interne Strukturrahmen (42) des Kopfes (24) und die mechanische Übertragung im Kopf (32) aufgenommen werden.

3. Gerät (10) gemäß einem der vorhergehenden Ansprüche, **dadurch gekennzeichnet, dass** die Kopfabdeckung (44) eine oder mehrere Wände (44a1, 44a2, 44c, 44d) aufweist, die das Innenvolumen begrenzen, in dem der interne Strukturrahmen (42) des Kopfes (24) und die mechanische Übertragung im Kopf (32) aufgenommen werden.

4. Gerät (10) gemäß einem der vorhergehenden Ansprüche, **dadurch gekennzeichnet, dass** die Kopfabdeckung (44) eine obere Wand (44a1), eine untere Wand (44b2) und zwei Seitenwände (44a2) aufweist, die die obere Wand (44a1) mit der unteren Wand (44b2) verbinden, wobei der interne Strukturrahmen (42) des Kopfes (24) und die mechanische Übertragung im Kopf (32) zwischen der oberen Wand (44a1) und der unteren Wand (44b2) der Kopfabdeckung (44) und zwischen den zwei Seitenwänden (44a2) der Kopfabdeckung (44) aufgenommen werden.

5. Gerät (10) gemäß einem der vorhergehenden Ansprüche, **dadurch gekennzeichnet, dass** die Kopfabdeckung (44) eine periphere Wand umfasst, die den internen Strukturrahmen (42) des Kopfes (24) und die mechanische Übertragung im Kopf (32) umgibt.

6. Gerät (10) gemäß einem der vorhergehenden Ansprüche, **dadurch gekennzeichnet, dass** die Kopfabdeckung (44) eine Öffnung (54) für den Hauptantrieb (26) aufweist.

7. Gerät (10) gemäß einem der vorhergehenden Ansprüche, **dadurch gekennzeichnet, dass** die Kopfabdeckung (44) zumindest teilweise auf dem internen Strukturrahmen (42) des Kopfes (24) befestigt ist.

8. Gerät (10) gemäß einem der vorhergehenden Ansprüche, **dadurch gekennzeichnet, dass** die Kopfabdeckung (44) in mehreren Teilen (44a, 44b) ausgeführt ist.

9. Gerät (10) gemäß einem der vorhergehenden Ansprüche, **dadurch gekennzeichnet, dass** der Hauptantrieb (26) durch den Zwischenrahmen (58) der mechanischen Übertragung im Kopf (32) getragen wird.

10. Gerät (10) gemäß einem der vorhergehenden Ansprüche, **dadurch gekennzeichnet, dass** der Hauptmotor (28) durch den internen Strukturrahmen (42) des Kopfes (24) getragen wird.

11. Gerät (10) gemäß einem der vorhergehenden Ansprüche, **dadurch gekennzeichnet, dass** der Sockel (12) einen Verbindungsteil (12a) umfasst, der von dem Bereich zur Aufnahme der Schüssel (20) in eine longitudinale Richtung des Geräts (10) nach hinten versetzt ist, und dass der interne Strukturrahmen (42) des Kopfes (24) auf dem Verbindungsteil (12a) des Sockels (12) durch die Lösungsverbindung montiert ist.

12. Gerät (10) gemäß einem der vorhergehenden Ansprüche, **dadurch gekennzeichnet, dass** die Lösungsverbindung mindestens eine Gelenkverbindung um eine horizontale Achse (A0) umfasst.

13. Gerät (10) gemäß einem der vorhergehenden Ansprüche, **dadurch gekennzeichnet, dass** der interne Strukturrahmen (42) des Kopfes (24) Formelemente (74, 76) umfasst, die in der Arbeitsposition mit ergänzenden Formelementen (72) des Sockels (12) zusammenwirken, um Bewegungen des Kopfes (24) in mindestens einer Richtung senkrecht zu einer Auslösebahn des Kopfes (24) zwischen seiner Arbeitsposition und seiner Gelöst-Position zu begrenzen, wobei die Auslösebahn durch die Lösungsverbindung definiert ist.

14. Gerät (10) gemäß einem der vorhergehenden Ansprüche, **dadurch gekennzeichnet, dass** der Sockel (12) einen unteren Strukturrahmen (66) aufweist, der eine Hauptarbeitsschüssel-Befestigungsklaue (22) hat, dass der untere Strukturrahmen (66) des Sockels (12) einen Verbindungsteil umfasst, der die Lösungsverbindung trägt, und dass der Sockel (12) eine Sockelabdeckung (68) umfasst, die sich vom unteren Strukturrahmen (66) unterscheidet und den unteren Strukturrahmen (66) von oben abdeckt.

15. Gerät (10) gemäß einem der vorhergehenden Ansprüche, **dadurch gekennzeichnet, dass** die Motorwelle (29) einen ersten oberen Antrieb (46) trägt.

16. Gerät (10) gemäß einem der vorhergehenden Ansprüche, **dadurch gekennzeichnet, dass** die mechanische Übertragung im Kopf (32) ein Eingangszahnrad (34) umfasst, das auf der Motorwelle (29) montiert ist, und dass das Eingangszahnrad (34) ein sekundäres Zahnrad (36) antreibt.

17. Gerät (10) gemäß einem der vorhergehenden Ansprüche, **dadurch gekennzeichnet, dass** die mechanische Übertragung im Kopf (32) verschiedene Komponenten umfasst, die gleichzeitig mit dem Hauptmotor (28) und dem Hauptantrieb (26) bewegt werden, die durch den Zwischenrahmen (58) getragen werden.

## Claims

1. Household food preparation appliance (10), of the type comprising:
. a base (12) having a footing (14) with a lower face (18) by which the base (12) is intended to rest on a supporting surface and an upper face on which a bowl receiving area (20) is arranged, configured to receive a main working bowl (22),
. a main motor (28) having a motor shaft (29) oriented along a motor axis,
. a head (24), linked to the base (12), the head (24) having a main driver (26) arranged beneath the head (24) facing the bowl receiving area (20) of the footing (14), driven in rotation by the main motor (28), and configured to drive a main working tool (30) in a main working movement,
the appliance (10) being of the type in which the head (24) is mounted on the base (12) by a release joint having at least one degree of freedom of movement such that the head (24) is movable relative to the base (12) between a working position and a released position in which the main driver (26) is further from the footing (14) than in the working position,
the appliance (10) being of the type in which the appliance (10) includes a head mechanical transmission (32) arranged in the head (24), driven by the motor shaft (29) of the main motor (28), and driving the main driver (26) in the main working movement,
the head (24) comprising an internal structural frame (42) mounted on the base (12) by the release joint, the internal structural frame (42) carrying the head mechanical transmission (32) and the main driver (26),
the head (24) including a head cover (44) distinct from the internal structural frame (42) of the head (24) and enveloping the internal structural frame (42) of the head (24) and the head mechanical transmission (32),
**characterized in that** the head mechanical transmission (32) includes an intermediate frame (58) configured to be fixed on the internal structural frame (42) and **in that** the head mechanical transmission (32) is carried by the internal structural frame (42) through the intermediate frame (58).

2. Appliance (10) according to claim 1, **characterized in that** the head cover (44) defines an internal volume within which the internal structural frame (42) of the head (24) and the head mechanical transmission (32) are received.

3. Appliance (10) according to any of the preceding claims, **characterized in that** the head cover (44) comprises one or more walls (44a1, 44a2, 44c, 44d) delimiting the internal volume within which the internal structural frame (42) of the head (24) and the head mechanical transmission (32) are received.

4. Appliance (10) according to any of the preceding claims, **characterized in that** the head cover (44) comprises an upper wall (44a1), a lower wall (44b2), and two side walls (44a2) connecting the upper wall (44a1) to the lower wall (44b2), the internal structural frame (42) of the head (24) and the head mechanical transmission (32) being received between the upper wall (44a1) and the lower wall (44b2) of the head cover (44) and between the two side walls (44a2) of the head cover (44).

5. Appliance (10) according to any of the preceding claims, **characterized in that** the head cover (44) comprises a peripheral wall surrounding the internal structural frame (42) of the head (24) and the head mechanical transmission (32).

6. Appliance (10) according to any of the preceding claims, **characterized in that** the head cover (44) comprises an opening (54) for the main driver (26).

7. Appliance (10) according to any of the preceding claims, **characterized in that** the head cover (44) is fixed at least partially on the internal structural frame (42) of the head (24).

8. Appliance (10) according to any of the preceding claims, **characterized in that** the head cover (44) is made in multiple parts (44a, 44b).

9. Appliance (10) according to any of the preceding claims, **characterized in that** the main driver (26) is carried by the intermediate frame (58) of the head mechanical transmission (32).

10. Appliance (10) according to any of the preceding claims, **characterized in that** the main motor (28) is carried by the internal structural frame (42) of the head (24).

11. Appliance (10) according to any of the preceding claims, **characterized in that** the base (12) comprises a connection portion (12a) offset from the bowl receiving area (20), rearward along a longitudinal direction of the appliance (10), and **in that** the internal structural frame (42) of the head (24) is mounted on the connection portion (12a) of the base (12) by the release joint.

12. Appliance (10) according to any of the preceding claims, **characterized in that** the release joint includes at least one articulation around a horizontal axis (A0).

13. Appliance (10) according to any of the preceding claims, **characterized in that** the internal structural frame (42) of the head (24) comprises shape elements (74, 76) that, in the working position, cooperate with complementary shape elements (72) of the base (12) to limit movements of the head (24) in at least one direction perpendicular to a release trajectory of the head (24) between its working position and its released position, the release trajectory being defined by the release joint.

14. Appliance (10) according to any of the preceding claims, **characterized in that** the base (12) comprises a lower structural frame (66) having a main working bowl fixing claw (22), **in that** the lower structural frame (66) of the base (12) comprises a connection portion carrying the release joint, and **in that** the base (12) comprises a base cover (68) distinct from the lower structural frame (66) and covering the lower structural frame (66) from above.

15. Appliance (10) according to any of the preceding claims, **characterized in that** the motor shaft (29) carries a first upper driver (46).

16. Appliance (10) according to any of the preceding claims, **characterized in that** the head mechanical transmission (32) includes an input gear wheel (34) mounted on the motor shaft (29) and **in that** the input gear wheel (34) drives a secondary gear wheel (36).

17. Appliance (10) according to any of the preceding claims, **characterized in that** the head mechanical transmission (32) includes different components moving simultaneously with the main motor (28) and the main driver (26), which are carried by the intermediate frame (58).
